# EUROPEAN PATENT APPLICATION

(11) **EP 2 896 528 A1**
(43) Date of publication of application: **22.07.2015**
(21) Application number: 12884543.5
(22) Date of filing: 14.09.2012
(51) Int. Cl.: B60K 6/46, B60W 10/06, B60W 10/26, B60W 20/00

(54) **PROPULSION CONTROL DEVICE FOR HYBRID VEHICLE**

(71) Applicant: Mitsubishi Electric Corporation, Tokyo 100-8310 (JP)
(72) Inventor: OKADA, Yuruki, Tokyo 100-8310 (JP); WADA, Yasuhiko, Tokyo 100-8310 (JP); YAMASAKI, Hisanori, Tokyo 100-8310 (JP); HATANAKA, Keita, Tokyo 100-8310 (JP)
(74) Representative: Zech, Stefan Markus
(86) International application number: PCT/JP2012/073713
(87) International publication number: WO 2014/041695

(57) **Abstract**

A propulsion control device of a hybrid vehicle that enables, during an operating state of a train, flexible control corresponding to the operating state includes a total control section 10 that totally controls a power generating device 2, a power storage device 3, and a load device 5. The total control section 10 monitors total generated power in all converters 24 in a train formation and controls, on the basis of the total generated power and a fuel consumption characteristic of engines 21, speed ωc of the engines 21 and generated power of the converters 24 to further reduce a total fuel consumption in the formation.

## Description

### Field

The present invention relates to a propulsion control device of a hybrid vehicle.

### Background

A hybrid vehicle is a railway vehicle configured to convert an output of an engine into electric power with a generator and drive an electric motor with the converted electric power and electric power from a power storage device such as a battery to perform propulsion control.

For the hybrid vehicle configured as explained above, for example, Patent Literature 1 described below discloses a vehicle driving system configured by distributedly disposing, as power generating means, fuel cells in each car of a train formation.

### Citation List

### Patent Literature

Patent Literature 1: Japanese Patent No. 4738087

### Summary

### Technical Problem

However, the fuel cells and fuel tanks, which are power sources of the fuel cells, have considerable weights. Therefore, the fuel cells and the fuel tanks need to be distributedly disposed in the formation cars. On the other hand, the fuel cells are power sources that require a long time for starting and stopping. Therefore, even when the fuel cells are distributedly disposed in the cars in the formation train, during an operating state of the train, flexible control corresponding to the operating state cannot be performed. Only control for, for example, determining in advance, according to a route, the number of fuel cells to be started is performed.

The present invention has been devised in view of the above and it is an object of the present invention to obtain a propulsion control device of a hybrid vehicle that enables, during an operating state of the train, flexible control corresponding to the operating state.

### Solution to Problem

In order to solve the aforementioned problems, a propulsion control device of a hybrid vehicle according to one aspect of the present invention is constructed to include: power generating devices including a plurality of engines, generators each being connected to the corresponding one of the engines, and converters each being connected to the corresponding one of the generators and converting alternating-current power output by the generators into desired direct-current power; a direct-current power transmission line that passes, between cars, the direct-current power output by the power generating devices; a plurality of power storage devices electrically connected to the direct-current power transmission line; a plurality of load devices electrically connected to the direct-current power transmission line; and a total control section that totally controls the power generating devices, the power storage devices, and the load devices, wherein the total control section monitors total generated power in all the converters in a train formation and controls, on the basis of the total generated power and a fuel consumption characteristic of each of the engines, speed of each of the engines and generated power of each of the converters to further reduce total fuel consumption in the rain formation.

### Advantageous Effects of Invention

According to the present invention, there is an effect that it is possible to perform, during an operating state of the train, flexible control corresponding to the operating state, and efficiently perform power saving operation.

### Brief Description of Drawings

FIG. 1 is a block diagram of a configuration example of a hybrid vehicle driving system including a propulsion control device of a hybrid vehicle according to a first embodiment.
FIG. 2 is a diagram of a configuration example in which the propulsion control device according to the first embodiment is mounted on a train.
FIG. 3 is a diagram of an example in which common main circuit units are distributedly disposed in a plurality of cars.
FIG. 4 is a diagram of a configuration example of the main circuit unit.
FIG. 5 is a diagram of a configuration example of a power storage device suitable in performing disconnection control of the power storage device.
FIG. 6 is a diagram illustrating an output characteristic and a fuel consumption characteristic of an engine in a relation with engine speed.
FIG. 7 is a diagram illustrating the fuel consumption characteristic in a relation with an engine output.
FIG. 8 is a diagram for explaining an effect by a control method in the first embodiment.
FIG. 9 is a diagram of a life characteristic of a battery module in the power storage device in a relation with the number of times charging and discharging.

### Description of Embodiments

Exemplary embodiments of a propulsion control device of a hybrid vehicle according to the present invention are explained below with reference to the accompanying drawings. Note that the present invention is not limited by the embodiments explained below.

### First Embodiment.

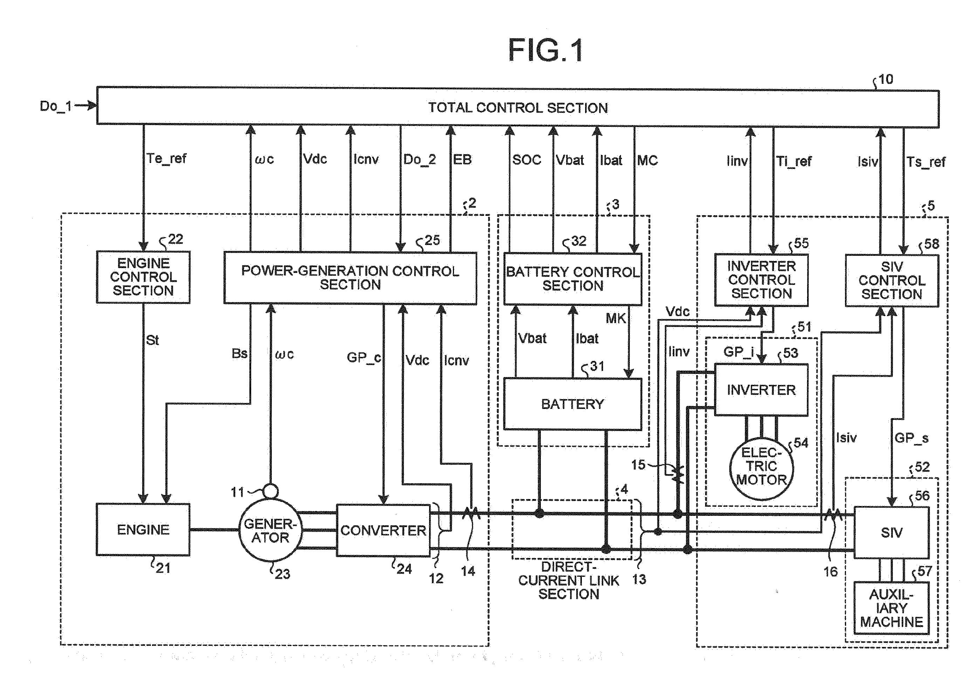

FIG. 1 is a block diagram of a configuration example of a hybrid vehicle driving system including a propulsion control device of a hybrid vehicle (hereinafter simply referred to as "propulsion control device") according to a first embodiment of the present invention. In FIG. 1, the hybrid vehicle driving system includes a power generating device 2, a power storage device 3, a direct-current link section 4, a load device 5, and a total control section 10.

The power generating device 2 includes an engine 21, an engine control section 22 that controls the engine 21, a generator 23 connected to the engine 21, a converter 24 that converts alternating-current power generated by the generator 23 into desired direct-current power, and a power-generation control section 25 that controls the engine 21 and the converter 24 to control a power generation amount of the generator 23.

The power storage device 3 includes a battery 31 configured to be capable of accumulating electric power and a battery control section 32 that performs power adjustment for the battery 31.

The direct-current link section 4 is a link section for electrically connecting the power generating device 2, the power storage device 3, and the load device 5.

The load device 5 includes a load device (a vehicle load device 51) related to vehicle driving, a load device (an SIV (Static Inverter) load device 52) other than the vehicle load device 51, a control section (an inverter control section 55) that controls the vehicle load device 51, and a control section (an SIV control section 58) that controls the SIV load device 52.

The vehicle load device 51 includes an inverter 53 that converts direct-current power supplied via the direct-current link section 4 into alternating-current power and an electric motor 54 that drives a vehicle with the alternating-current power from the inverter 53.

The SIV load device 52 includes an SIV 56 functioning as an auxiliary power supply device that converts the direct-current power supplied via the direct-current link section 4 into alternating-current power and an auxiliary device (an auxiliary machine) 57 that receives power supply from the SIV 56 and operates. The auxiliary machine is a general term of devices other than a driving device.

The total control section 10 is a control section that supervises the operation of the entire propulsion control device. The total control section 10 controls the engine control section 22, the power-generation control section 25, the battery control section 32, the inverter control section 55 and the SIV control section 58, on the basis of an operation command Do_1 from a not-shown motorman's cab and various sensor outputs from a speed sensor 11, voltage sensors 12 and 13, current sensors 14 and 15, and the like.

The sections configuring the propulsion control device are explained more in detail.

The engine 21 is, for example, a diesel engine. The engine 21 transmits a driving force for power generation to the generator 23. Note that the engine 21 is also capable of performing operation of an engine brake or a so-called exhaust brake (a reinforced engine brake) by closing, during a regenerative operation of the electric motor 54, an engine brake and a valve provided halfway in an exhaust pipe to increase exhaust pressure, thereby to increase a pumping loss of the engine 21, and suppress speed. The engine 21 is also capable of performing switching of the engine brake and the exhaust brake by performing ON/OFF control of an exhaust valve. For example, in the configuration shown in FIG. 1, these kinds of control are executable by outputting a valve operation signal Bs from the power-generation control section 25 to the engine 21.

The generator 23 is, for example, a three-phase alternating-current generator. The generator 23 functions as a power supply source that supplies, to the direct-current link section 4, electric power (alternating-current power) generated by rotation of a rotor rotated by a driving force of the engine 21. The generator 23 can operate as an electric motor as well. Electric power can be consumed by cranking the engine 21 during the starting time of the engine 21 or by rotating the engine 21 using a driving force of the generator 23.

The converter 24 includes a plurality of switching elements and a plurality of diode elements not shown in the figure. The converter 24 is connected between the direct-current link section 4, to which the battery 31, the inverter 53, and the SIV 56 are electrically connected, and the generator 23. The converter 24 converts alternating-current power generated by the generator 23 into direct-current power on the basis of a gate signal Gp_c from the power-generation control section 25. When the generator 23 is operated as an electric motor, the converter 24 performs reverse conversion operation for converting direct-current power supplied from the battery 31 or the inverter 53 into alternating-current power.

The inverter 53 includes a plurality of switching elements and a plurality of diode elements not shown in the figure. The inverter 53 converts direct-current power supplied from at least one of the battery 31 and the converter 24 into alternating-current power and supplies the alternating-current power to the electric motor 54. When the electric motor 54 is caused to perform regenerative operation, the inverter 53 is capable of performing reverse conversion operation for converting alternating-current power regenerated by the electric motor 54 into direct-current power. The electric motor 54 is, for example, a three-phase alternating-current electric motor. However, the electric motor 54 can also operate as a generator. During deceleration of the vehicle, the electric motor 54 performs operation for generating regenerative power and regenerating kinetic energy of the vehicle.

The battery 31 is, for example, a lithium ion secondary cell. The battery 31 is charged with output power of the generator 23 and regenerative power of the electric motor 54 supplied via the direct-current link section 4. On the other hand, the battery 31 supplies driving power for driving the generator 23 and the electric motor 54 to the direct-current link section 4.

The engine control section 22 controls throttle opening St of the engine 21 on the basis of an engine torque command Te_ref given by the total control section 10 and a signal of, for example, the speed of the engine detected by a sensor (not shown in the figure) provided in the engine 21, and controls the engine 21 to generate torque corresponding to the engine torque command Te_ref.

The power-generation control section 25 generates, on the basis of speed ωc of the generator 23 detected by the speed sensor 11 attached to the generator 23 and a direct-current link section voltage value Vdc and an input/output current value (a converter current value) Icnv of the converter 24 respectively detected by the voltage sensor 12 provided in the direct-current link section 4 and the current sensor 14, a gate signal GP_c for switching-controlling the switching elements that configure the converter 24. The power-generation control section 25 outputs the generated gate signal GP_c to the converter 24 and controls an output voltage of the converter 24.

The power-generation control section 25 notifies the total control section 10, as information necessary for the control by the total control section 10, the speed ωc, the direct-current link section voltage value Vdc, the converter current value Icnv, and an engine brake signal EB explained later.

The battery control section 32 estimates a state of charge (SOC) of the battery 31 on the basis of a battery current value Ibat serving as a charging current or a discharging current of the battery 31 detected by a current sensor (not shown in the figure) of the battery 31 and a battery voltage value Vbat detected by a voltage sensor (not shown in the figure) of the battery 31. The battery control section 32 outputs the detected battery current value Ibat and the detected battery voltage value Vbat and the estimated SOC to the total control section 10. Note that it can be configured such that the battery current value Ibat and the battery voltage value Vbat are detected by providing the current sensor and the voltage sensor in the direct-current link section 4, and those detection values are input to the battery control section 32.

The battery control section 32 receives an input command MC from the total control section 10, generates an input signal MK, and controls opening and closing of a contactor (details are explained blow) provided in the battery 31.

The inverter control section 55 generates a gate signal GP_i, which is a so-called PWM switching signal, for controlling the inverter 53 to cause the torque of the electric motor 54 to follow an electric motor torque command Ti_ref given from the total control section 10. The inverter control section 55 outputs the generated gate signal GP_i to the load device 5 and controls the inverter 53.

The inverter control section 55 notifies the total control section 10 of, as information necessary for the control by the total control section 10, an input/output current (an inverter current value) Iinv of the inverter 53 detected by the current sensor 15.

The SIV control section 58 generates, on the basis of an SIV control command Ts_ref from the total control section 10, a gate signal GP_s for controlling the switching elements of the SIV 56 and controls the SIV 56.

The SIV control section 58 notifies the total control section 10 of, as information necessary for the control by the total control section 10, an input/output current (an SIV current value) Isiv of the SIV 56 detected by a current sensor 16.

The total control section 10 has a function of managing and monitoring the entire operation of the components explained above. More specifically, the total control section 10 generates the engine torque command Te_ref, a power generation control command Do_2, the input command MC, the electric motor torque command Ti_ref, and the SIV control command Ts_ref on the basis of the speed ωc of the generator 23, the direct-current link section voltage value Vdc, the converter current value Icnv, the battery current value Ibat, the battery voltage value Vbat, the inverter current value Iinv, the SIV current value Isiv, an operation command Do_1, and the like (in short, the engine brake signal EB). The total control section 10 controls the engine 21, the converter 24, the battery 31, the inverter 53, and the SIV 56 through the engine control section 22, the power-generation control section 25, the battery control section 32, the inverter control section 55, and the SIV control section 58.

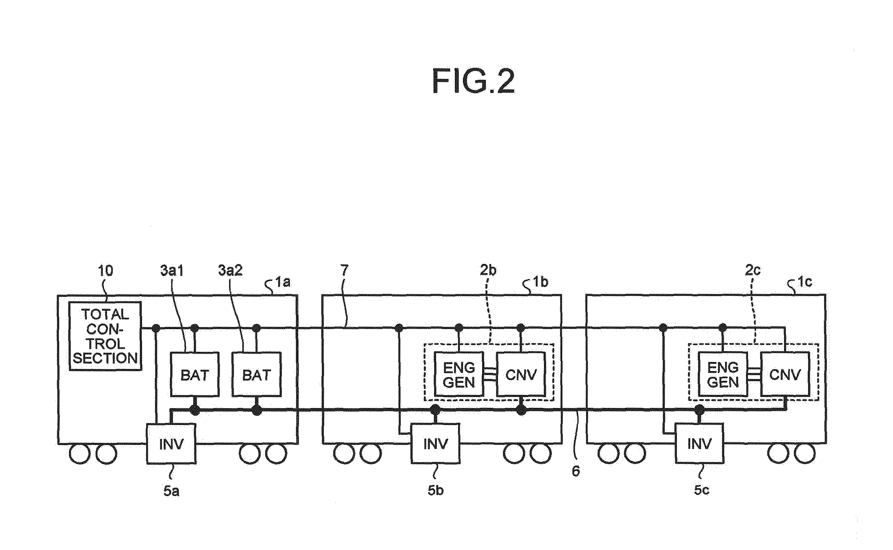

FIG. 2 is a diagram of a configuration example in which the propulsion control device according to the first embodiment is mounted on a train. In FIG. 2, a three-car train including cars 1a to 1c is shown as an example. However, the number of cars is an example. The train can be a train including two or less cars (including one car) or can be a train including four or more cars.

In FIG. 2, "BAT" and "INV" are components respectively equivalent to the power storage device 3 and the load device 5 shown in FIG. 1 and contain a control section in each thereof. The same can be applied to "ENG", "GEN", and "CNV". That is, in the example shown in FIG. 2, a configuration is shown in which two power storage devices 3a1 and 3a2 are mounted on the car 1a, two power generating devices 2b and 2c are distributedly disposed in the car 1b and the car 1c, and three load devices 5a to 5c are distributedly disposed in the car 1a to the car 1c. The total control section 10 is disposed in the car 1a. The total control section 10, the power storage devices 3a1 and 3a2, the power generating devices 2b and 2c, and the load devices 5a to 5c are connected by a control information transmission line 7 capable of performing bidirectional information transmission. The power storage devices 3a1 and 3a2, the power generating devices 2b and 2c, and the load devices 5a to 5c are connected by a direct-current power transmission line 6 capable of performing bidirectional power transmission.

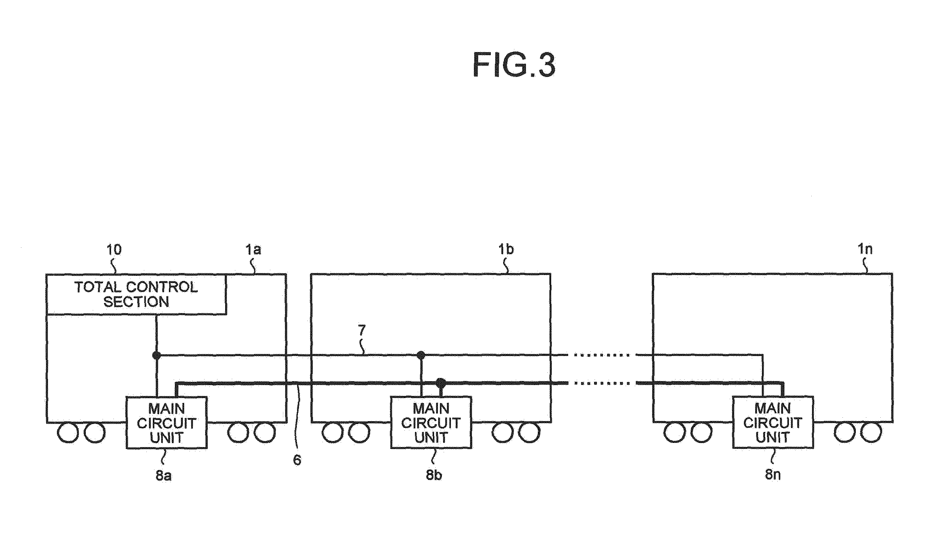

In FIG. 2, an example is shown in which the sections configuring the propulsion control device are distributedly disposed in the formation cars as appropriate. On the other hand, FIG. 3 is a diagram of an example in which common main circuit units 8a to 8n are distributedly disposed in cars 1a to In.

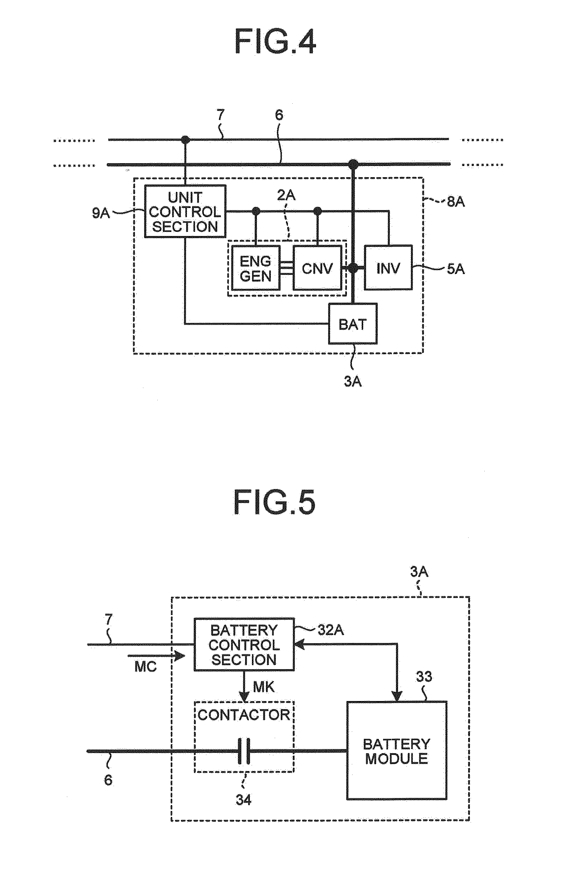

In FIG. 4, a main circuit unit 8A includes a power generating device 2A, a power storage device 3A, a load device 5A, and a unit control section 9A that controls these devices. As shown in FIG. 4, if the unit control section 9A is provided assuming that all of the power generating device 2A, the power storage device 3A, and the load device 5A are mounted therein, apparatuses and devices to be mounted on the cars can be used in common. There is an effect that it is made possible to standardize the apparatuses and communize the use of input/output specifications, thereby to reduce fitting costs, and easily realize redundancy of the apparatuses.

For example, when the main circuit unit 8A shown in FIG. 4 is mounted on the car 1a shown in FIG. 2, it is sufficient to remove the power generating device 2A and configure the unit control section 9A as the total control section 10. In this case, the functions of each of the control sections in the power storage device 3A and the load device 5A can be integrated in the unit control section 9A. That is, at least one of the functions of the battery control section 32, the inverter control section 55, and the SIV control section 58 can be configured in the unit control section 9A.

Similarly, when the main circuit unit 8A shown in FIG. 4 is mounted on the car 1b shown in FIG. 2, the power storage device 3A only has to be removed. In this case, the functions of each of the control sections in the power generating device 2A and the load device 5A can be integrated in the unit control section 9A. Alternatively, control functions can be provided inside of the power generating device 2A and the load device 5A, and the unit control section 9A is not provided.

When the propulsion control device is configured by the main circuit unit 8A shown in FIG. 4, there is an effect that the main circuit unit itself can be made more compact as the number of formation cars increases.

FIG. 5 is a diagram of a configuration example of a power storage device suitable for performing disconnection control of the power storage device. In FIG. 5, the power storage device 3A includes a contactor 34, which is a circuit switch for a direct-current cutoff, in addition to a battery control section 32A and a battery module 33. The contactor 34 is controlled by the battery control section 32A. The contactor 34 is controlled to a closed circuit side when an input signal HK from the battery control section 32A changes to an ON state, and is controlled to an open circuit side when the input signal MK changes to an OFF state. Note that, in FIG. 5, the contactor 34 is controlled by the battery control section 32A that receives the input command MC input from the total control section 10 through the control information transmission line 7. However, it can be configured such that the total control section 10 generates the input signal MK and controls the contactor 34.

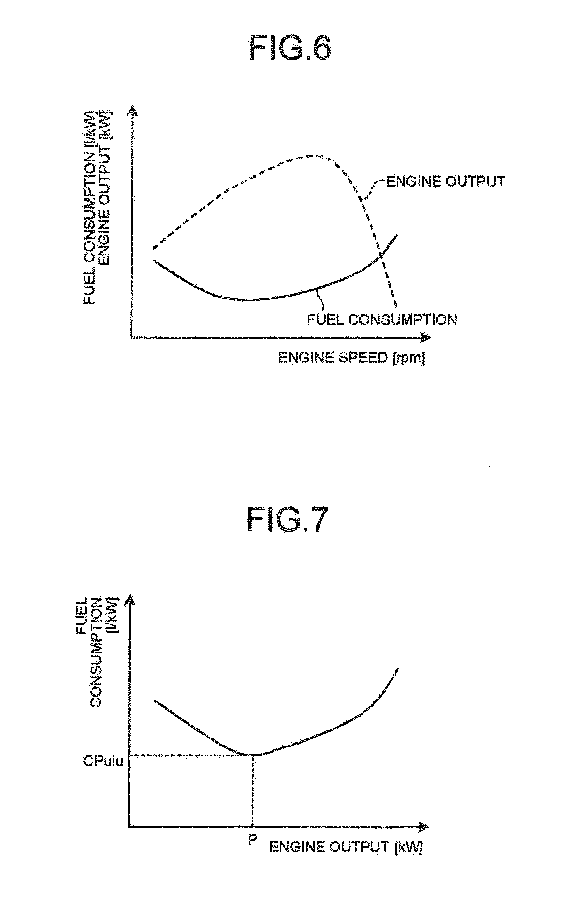

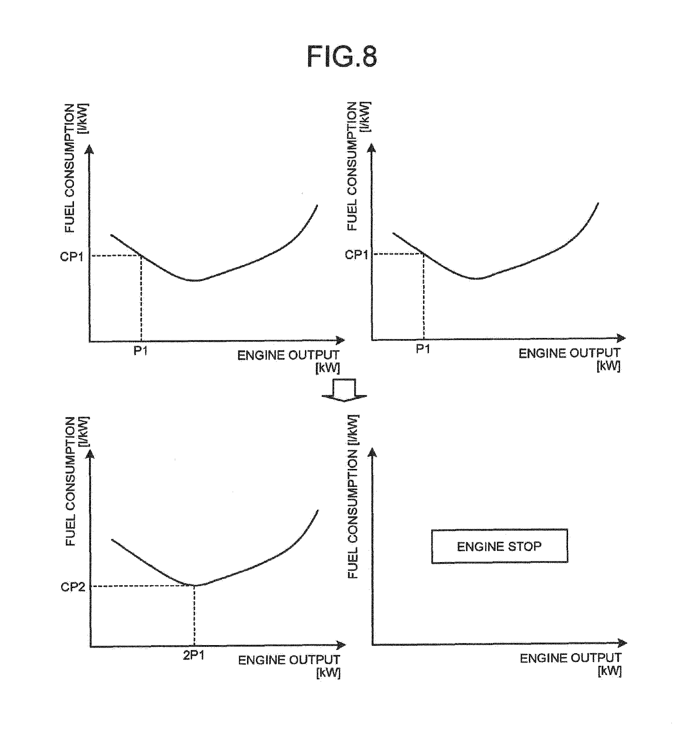

The main part operation of the propulsion control device according to the first embodiment is explained with reference to the drawings of FIG. 6 to FIG. 8 as appropriate. FIG. 6 is a diagram illustrating an output characteristic and a fuel consumption characteristic of the engine in a relation with engine speed. FIG. 7 is a diagram illustrating the fuel consumption characteristic in a relation with an engine output. FIG. 8 is a diagram for explaining an effect obtained by a control method of the first embodiment.

FIG. 6 shows characteristics of a typical diesel engine. A solid line indicates the fuel consumption characteristic and a broken line indicates the output characteristic of the engine. As shown in FIG. 6, a point (engine speed) at which the fuel consumption is minimized and a point (engine speed) at which the engine output is maximized are different.

FIG. 7 is a diagram illustrating the characteristics shown in FIG. 6 in a relation with the engine output and fuel efficiency. According to a fuel efficiency characteristic shown in FIG. 7, a point (CPmin) at which the fuel consumption is minimized is present in an engine output P. Therefore, for example, if total generated power in all converters in a formation is monitored, control for further reducing a total fuel consumption in the formation is possible. Note that the total generated power in all the converters can be calculated on the basis of a direct-current link section voltage value Vdc and a converter current value Icnv notified from each of power-generation control sections.

Therefore, in the first embodiment, control explained below is performed. First, the total control section 10 monitors total generated power in all converters 24 in the formation and controls, according to the total generated power and the output characteristic of the engines 21, the speed of the engines 21 and the generated power of the converters 24 so as to further reduce a total fuel consumption in the formation. Note that the speed control for the engines 21 can be performed through the engine control section 22. The generated power control for the converters 24 can be performed through the power-generation control section 25. Note that the engine output characteristic and the fuel efficiency characteristic shown in FIG. 6 can be retained in a table format or can be calculated by a functional calculation.

Note that, in the control explained above, when required generated power is small, it is preferable to stop several engines in the formation. For example, as shown in an upper part of FIG. 8, it is assumed that each of two engines is operated with an engine output P1. In this case, a fuel consumption (a total fuel consumption) of the two engines is 2CP1. On the other hand, if one engine is stopped and only the other engine is operated, as shown in a lower part of FIG. 8, the total fuel consumption can be reduced from 2CP1 to CP2 (CP1>CP2), and it is made possible to greatly reduce the total fuel consumption.

FIG. 8 is an example simplified for facilitation of understanding. As another example, it is assumed that total generated power of all the converters converted into an engine output is nP (P represents an engine output that gives the minimum fuel consumption CPmin shown in FIG. 7) or a value near nP. For example, when the number of engines is (n+2), it is possible to further reduce a total fuel consumption of the engines by stopping two engines and operating the remaining n engines with the engine output P. Even when the total generated power of all the converters is not a value near nP, a point at which the total fuel consumption is minimized is present. Therefore, it is possible to perform control for operating the engines near the minimum point.

As another example, when the total generated power of all the converters converted into an engine output is nP (P represents the engine output that gives the minimum fuel consumption CPmin in FIG. 7) or a value near nP and the number of engines is (n-2), if an output equivalent to two engines is covered by an output of a power storage device, it is possible to further reduce the total fuel consumption of the engines. For example, when there are eight power storage devices in the formation and an output equivalent to two engines can be covered by outputs of four power storage devices, it is possible to further reduce the total fuel consumption of the engines by stopping four power storage devices or disconnecting the four power storage devices from the direct-current power transmission line 6 and operating the other four power storage devices. As explained above, even when the total generated power of all the converters is not a value near nP, a point at which the total fuel consumption is minimized is present. Therefore, it is possible to perform control for operating the engines and the power storage devices near the minimum point. Note that such control can be realized by monitoring a total amount of charging/discharging power of all the power storage devices in the formation.

In the control explained above, when energy efficiency of the power storage devices is higher when, for example, six power storage devices are operated than when, for example, four power storage devices are operated, it goes without saying that it is preferable to control two power storage devices to be stopped or disconnected from the direct-current power transmission line 6 and operating six power storage devices.

Note that, the control explained above is realized by monitoring the total generated power in all the converters in the formation. However, a sum of power consumption in all the load devices in the formation can be monitored instead of or in addition to the monitoring of the total generated power in all the converters in the formation. Note that the sum of the power consumption in the load devices can be calculated on the basis of the direct-current link section voltage value Vdc notified from the power-generation control sections 25, the inverter current value Iinv notified from the inverter control sections 55, and the SIV current value Isiv notified from the SIV control sections 58.

As explained above, with the propulsion control device according to the first embodiment, total generated power in all the converters in the formation is monitored and the speed of each of the engines and the generated power of each of the converters are controlled on the basis of the total generated power and the fuel consumption characteristic of each of the engines so as to further reduce the total fuel consumption in the formation. Therefore, it is made possible to perform, during an operating state of the train, flexible control corresponding to the operating state, and efficiently perform power saving operation.

With the propulsion control device according to the first embodiment, a sum of power consumption in a plurality of load devices is monitored and the speed of the engines and the generated power of each of the converters are controlled on the basis of the sum of the power consumption and the fuel consumption characteristic of each of the engines so as to further reduce the total fuel consumption in the formation. Therefore, it is made possible to perform, during a service of a train, flexible control corresponding to the train service and efficiently perform power saving operation.

With the propulsion control device according to the first embodiment, when the control for further reducing the total fuel consumption in the formation is executed, it is determined whether several engines in the formation are stopped. Therefore, it is made possible to more efficiently perform the power saving operation.

With the propulsion control device according to the first embodiment, when the control for further reducing the total fuel consumption in the formation is executed, it is determined whether disconnection of the power storage devices is performed. Therefore, it is made possible to more efficiently perform the power saving operation of the devices including the power storage devices.

With the propulsion control device according to the first embodiment, a total amount of charging/discharging power of all the power storage devices in the formation is monitored and the number of the power storage devices to be subjected to disconnection control is determined on the basis of the total amount of the charging/discharging power. Therefore, it is made possible to more efficiently perform the power saving operation including the power storage devices.

### Second Embodiment.

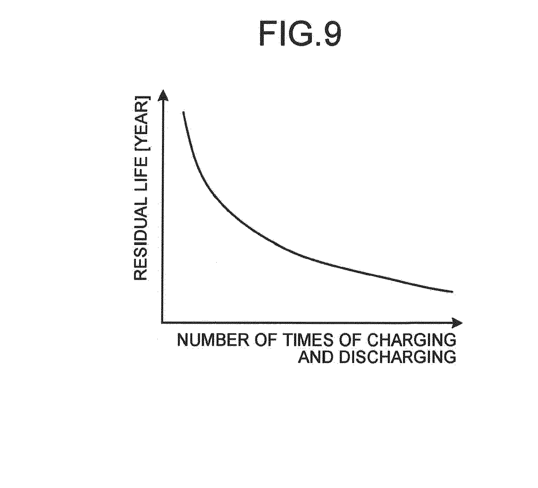

A main part operation of a propulsion control device according to a second embodiment is explained with reference to a drawing of FIG. 9. FIG. 9 is a diagram illustrating a life characteristic of a battery module in a power storage device in a relation with the number of charging and discharging.

As shown in FIG. 9, the life of the battery module decreases as the number of times of charging and discharging increases. Therefore, the propulsion control device according to the second embodiment performs control to average the number of charging and discharging of all power storage devices. When it is not desired to operate the power storage device 3, the contactor 34 (see FIG. 5) provided in the power storage device 3 only has to be controlled to an open circuit side. The total control section 10 is capable of managing the number of charging and discharging by managing, for each of the power storage devices 3, the number of outputs of the input command MC output to each of the power storage devices 3.

By using such management of the number of charging and discharging for the power storage devices 3 together with the control in the first embodiment, there is an effect that it is possible to average the number of charging and discharging of the power storage devices and, as a result, it is made possible to increase the life of the power storage devices.

Note that the configurations explained in the first and second embodiments are examples of the configuration of the present invention. It goes without saying that the configurations can be combined with other publicly-known technologies and can be configured to be changed to, for example, omit a part of the configurations without departing from the spirit of the present invention.

### Industrial Applicability

As explained above, the present invention is useful as a propulsion control device of a hybrid vehicle that enables flexible control corresponding to a train service.

### Reference Signs List

- 1a to 1c: Cars
- 2, 2A, 2b, 2c: Power generating devices
- 3, 3A, 3a1, 3a2: Power storage devices
- 4: Direct-current link section
- 5, 5a to 5c, 5A: Load devices
- 6: Direct-current power transmission line
- 7: Control information transmission line
- 8a to 8n, 8A: Main circuit units
- 9A: Unit control section
- 10: Total control section
- 11: Speed sensor
- 12, 13: Voltage sensors
- 14, 15, 16: Current sensors
- 21: Engine
- 22: Engine control section
- 23: Generator
- 24: Converter
- 25: Power-generation control section
- 31: Battery
- 32, 32A: Battery control sections
- 33: Battery module
- 34: Contactor
- 51: Vehicle load device (load device related to vehicle driving)
- 52: SIV load device (load device not related to vehicle driving)
- 53: Inverter
- 54: Electric motor
- 55: Inverter control section
- 56: Inverter control section
- 58: SIV control section

## Claims

1. A propulsion control device of a hybrid vehicle comprising:
power generating devices including a plurality of engines, generators each being connected to the corresponding one of the engines, and converters each being connected to the corresponding one of the generators and converting alternating-current power output by the generators into desired direct-current power;
a direct-current power transmission line that passes, between cars, the direct-current power output by the power generating devices;
a plurality of power storage devices electrically connected to the direct-current power transmission line;
a plurality of load devices electrically connected to the direct-current power transmission line; and
a total control section that totally controls the power generating devices, the power storage devices, and the load devices, wherein
the total control section monitors total generated power in all the converters in a train formation and controls, on the basis of the total generated power and a fuel consumption characteristic of each of the engines, speed of each of the engines and generated power of each of the converters to further reduce total fuel consumption in the rain formation.

2. A propulsion control device of a hybrid vehicle comprising:
power generating devices including a plurality of engines, generators each being connected to the corresponding one of the engines, and converters each being connected to the corresponding one of the generators and converting alternating-current power output by the generators into desired direct-current power;
a direct-current power transmission line that passes, between cars, the direct-current power output by the power generating devices;
a plurality of power storage devices electrically connected to the direct-current power transmission line;
a plurality of load devices electrically connected to the direct-current power transmission line; and
a total control section that totally controls the power generating devices, the power storage devices, and the load devices, wherein
the total control section monitors a sum of power consumption in the plurality of load devices and controls, on the basis of the sum of the power consumption and a fuel consumption characteristic of each of the engines, speed of each of the engines and generated power of each of the converters to further reduce total fuel consumption in a train formation.

3. The propulsion control device of the hybrid vehicle according to claim 1 or 2, wherein, when executing the control for further reducing the total fuel consumption in the formation, the total control section determines whether or not several engines in the formation are to be stopped.

4. The propulsion control device of the hybrid vehicle according to claim 3, wherein
in the power storage devices, circuit switches that open and close the electric connection to the direct-current power transmission line are provided and
when executing the control for further reducing the total fuel consumption in the formation, the total control section determines whether or not disconnection of the power storage devices is to be performed.

5. The propulsion control device of the hybrid vehicle according to claim 4, wherein the total control section monitors a total amount of charging/discharging power of all the power storage devices in the formation and determines, on the basis of the total amount of the charging/discharging power, a number of the power storage devices to be subjected to disconnection control.

6. The propulsion control device of the hybrid vehicle according to claim 5, wherein the total control section determines, for averaging the number of charging and discharging of the power storage devices in the formation, the power storage devices to be subjected to the disconnection control.

7. The propulsion control device of the hybrid vehicle according to claim 1 or 2, wherein
a plurality of main circuit units including the power generating devices, the power storage devices and the load devices, and also unit control sections that respectively control the power generating devices, the power storage devices and the load devices, are configured in the formation, and
the total control section outputs a control signal to the main circuit units.

8. The propulsion control device of the hybrid vehicle according to claim 1 or 2, wherein the load devices are load devices related to vehicle driving.

9. The propulsion control device of the hybrid vehicle according to claim 8, wherein the load devices not related to the vehicle driving are included in the load devices.
